# EUROPÄISCHE PATENTSCHRIFT

(11) **EP 1 314 945 B1**
(45) Veröffentlichungstag und Bekanntmachung des Hinweises auf die Patenterteilung: **26.07.2006**
(21) Anmeldenummer: 02026299.4
(22) Anmeldetag: 27.11.2002
(51) Int. Cl.: F28C 1/14

(54) **Anordnung von Hybridkühltürmen**
Arrangement of hybrid cooling towers
Dispositif de tours de refroidissement hybrides

(30) Priorität: 27.11.2001 DE 10158049
(43) Veröffentlichungstag der Anmeldung: 28.05.2003
(73) Patentinhaber: Balcke GmbH, 46049 Oberhausen (DE)
(72) Erfinder: Fehndrich, Bernd, 40219 Düsseldorf (DE)
(74) Vertreter: Lang, Friedrich

(56) Entgegenhaltungen:
- EP-A- 0 641 979
- FR-A- 2 230 950
- US-A- 4 022 853
- PATENT ABSTRACTS OF JAPAN Bd. 009, Nr. 194 (M-403), 10. August 1985 (1985-08-10) -& JP 60 057192 A (ISHIKAWAJIMA HARIMA JUKOGYO KK), 2. April 1985 (1985-04-02)

## Beschreibung

Die Erfindung betrifft eine Anordnung mehrerer Hybridkühltürme, die sich jeweils zusammensetzen aus
a) einem Naßteil mit Wasserverteileinrichtungen für den unmittelbaren Wärmeaustausch zwischen Kühlwasser und seitlich in den Naßteil zuströmender Umgebungsluft,
b) einem oberhalb des Naßteils angeordneten Trockenteil mit Wärmetauschern für den mittelbaren Wärmeaustausch zwischen Kühlwasser und seitlich in den Trockenteil zuströmender Umgebungsluft,
c) einer gemeinsamen Mischkammer für die den Naßteil und die den Trockenteil verlassende Luft.

Für die Kühlung von Kühlwasser durch Umgebungsluft werden häufig Naßkühltürme eingesetzt, welche nach dem Prinzip der Verdunstungskühlung arbeiten. Hierbei rieselt das zu kühlende Wasser unter Schwerkrafteinfluß durch sogenannte Kühleinbauten, wohingegen die Luft von unten nach oben durch diese Kühleinbauten gesaugt oder gedrückt wird. Die Kühlwirkung beruht zum einen auf der Verdunstung eines kleinen Anteils des Wassers, wodurch dem Kühlwasserstrom Verdunstungswärme entzogen wird, und zum anderen Teil auf einem konvektiven Wärmeübergang von dem Wasser an die im Gegenstrom aufsteigende Kühlluft. Bei Naßkühltürmen ist die häufigste Bauart der sogenannte Zellenkühlturm mit saugend arbeitendem Ventilator. Derartige Zellenkühltürme sind im Grundriß rechteckige Zellen. Je ein Ventilator je Zelle saugt die Kühlluft durch den Turm zu dessen oberem Austritt, durch den hindurch ein übersättigtes Luft-Wasser-Gemisch den Kühlturm verläßt.

Von Nachteil bei Naßkühltürmen sind die bei vielen Wetterlagen deutlich sichtbaren Schwaden. Deren Entstehen resultiert aus der physikalischen Wirkungsweise eines Kühlturms, bei der das abzukühlende Wasser im wesentlichen durch Verdunstung eines kleinen Teils des Wassers gekühlt wird. Der beim Verlassen des Kühlturms deutlich sichtbare Schwaden besteht daher aus übersättigter Luft und darin verteilten kleinen Wassertröpfchen.

Damit Schwaden am Kühlturmaustritt nicht sichtbar sind, wurden kombinierte Naß-Trockenkühltürme entwickelt, die auch als Hybridkühltürme bezeichnet werden. Der Hybridkühlturm arbeitet im Prinzip wie ein Naßkühlturm, jedoch wird dem Schwaden vor dem Verlassen des Kühlturms ein trockener, warmer Luftstrom zugemischt. Der Luftstrom wird durch mittelbaren Wärmeübergang in Wärmetauschern erzeugt, wobei das abzukühlende Kühlwasser als Heizmedium dient. Dieser mit mittelbarem Wärmeübergang arbeitende Trockenteil wird oberhalb des Naßteils angeordnet, wobei sich am Ort des Zusammenströmens beider Kühlturmteile einer Mischkammer ergibt, in der mittels geeigneter Verwirbelungseinbauten eine möglichst gute Vergleichmäßigung des Luft-Wasserdampf-Gemisches erzielt wird.

Figur 1a zeigt schematisch einen solchen Hybridkühlturm in kombinierter Naß/Trockenbauweise. Mit Pfeilen ist die Zuströmung der Umgebungsluft in den unten angeordneten Naßteil sowie den oben angeordneten Trockenteil symbolisiert.

Zum Erzielen hoher Kühlleistungen, z.B. beim Einsatz der Hybridkühltürme in Kraftwerken, ist eine große Anzahl an Zellenkühltürmen erforderlich. Da die zur Verfügung stehende Aufstellungsfläche häufig begrenzt ist, stehen zwei Arten der Anordnung der Kühltürme zur Auswahl:

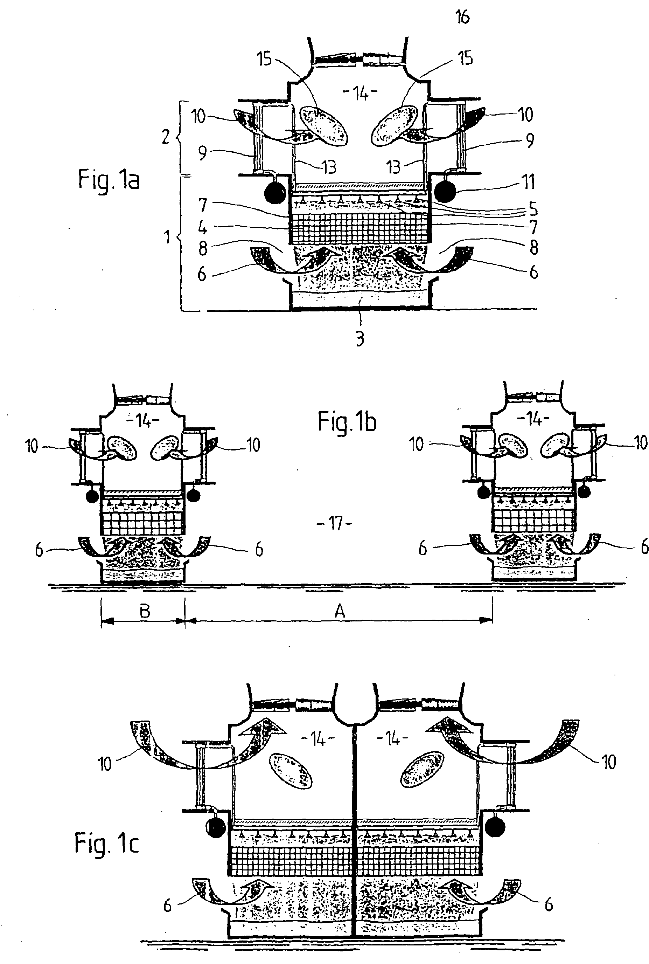

Figur 1b zeigt eine Anordnung, bei der die einzelnen Kühltürme in zwei zueinander parallelen Reihen aufgestellt sind. Eine solche Anordnung ist beispielsweise aus der EP-641 979 bekannt. Bei dieser Anordnung kann es in größeren Kühlanlagen zu Interferenzerscheinungen kommen. Hierunter wird verstanden, daß Schwaden, welche aus den Kühltürmen einer Reihe austreten, von den Kühltürmen der anderen Reihe wieder angesogen werden. Diese Interferenz tritt je nach vorherrschender Windrichtung in geringerem oder stärkerem Maße auf. Sie erhöht die Temperatur der zuströmenden Kühlluft und damit die Temperatur, auf die das Wasser gekühlt wird. Die Interferenz muß durch eine entsprechende Anpassung bei der Auslegung der einzelnen Kühltürme berücksichtigt werden, was in der Regel größere Ausmaße der Kühltürme zur Folge hat. Außerdem muß zwischen den beiden Reihen ein Mindestabstand A vorgesehen werden, welcher etwa das dreifache der Breite B des Naßteils beträgt. Der Flächenverbrauch ist daher beträchtlich.

Eine Alternative ist eine Anordnung der Kühltürme, wie sie in Figur 1c dargestellt ist. Diese Anordnung erfordert einen geringeren Platzbedarf als die Anordnung gemäß Figur 1b. Außerdem ist der Interferenzeffekt wesentlich geringer. Allerdings bewirkt die Anordnung nach Figur 1c, bei der die Kühltürme verschiedener Reihen mit einer gemeinsamen Seite unmittelbar gegeneinander gesetzt werden, daß sich der Lufteintritt für jeden Kühlturm nur noch auf einer Seite befindet. Dies hat zur Folge, daß sich die Höhe der Öffnungen für den Lufteintritt gegenüber einem Lufteintritt auf beiden Seiten des Kühlturms etwa verdoppelt. Beträgt die Höhe des Lufteintrittes im allgemeinen, d.h. bei der einfachen Anordnung nach den Figuren 1a und 1b z.B. 3 bis 4 m, so muß diese Höhe bei der Anordnung nach Figur 1c zwischen 6 und 8 m betragen. Dies führt zu einer beträchtlichen Vergrößerung der Bauhöhe des Kühlturms. Außerdem erhöht sich die erforderliche Förderhöhe für die Wasserpumpe, welche das Kühlwasser in den Kühlturm fördert, da auch das Wasserverteilungssystem analog dem höheren Lufteintritt auf einem höheren Niveau angeordnet werden muß.

Bei der Anordnung nach Figur 1c vergrößern sich aber nicht nur die Luftaustrittsöffnungen. Auch die Wärmetauscher des Trockenteils müssen in ihrer Höhe vergrößert werden. Dies kann zu hydraulischen Problemen führen, da ab einer bestimmten Höhe des Wärmetauschers die sich darin einstellende Flüssigkeitssäule hydraulisch abreißt. Von besonderem Nachteil bei der Anordnung gemäß Figur 1c ist jedoch die ungleichmäßige Durchmischung der einerseits aus dem Naßteil und andererseits aus dem Trockenteil ausströmenden Luft innerhalb der gemeinsamen Mischkammer. Die von dem Wärmetauscher seitlich einströmende Luft neigt dazu, direkt zu dem oberhalb angeordneten, saugenden Ventilator durchzuströmen, ohne daß es zu größeren Mischungseffekten mit der aus dem Naßteil aufsteigenden, übersättigten Luft kommt. Um gleichwohl eine ausreichende Durchmischung in der Mischkammer zu erreichen, müßten aufwendige Zusatzmaßnahmen getroffen werden, wie z.B. Verlängerungen der Mischstrecke, Erzeugung eines zusätzlichen Widerstandes vor dem Ventilator oder Einbau von Mischkanälen zur Führung der trockenen Luft.

Der Erfindung liegt die **Aufgabe** zugrunde, eine Anordnung von Hybridkühltürmen vorzuschlagen, die sich durch einen relativ geringen Flächenbedarf bei sehr guter Durchmischung zwischen der aus dem Naßteil und der aus dem Trockenteil austretenden Luft auszeichnet.

Zur **Lösung** dieser Aufgabe wird bei einer Anordnung mit den eingangs genannten Merkmalen vorgeschlagen, daß die Kühltürme in zwei zueinander im wesentlichen parallelen Reihen angeordnet sind, zwischen denen sich ein Freiraum befindet, wobei die Breite des Freiraums, gemessen zwischen den einander zugewandten Seiten des Naßteils, weniger als das Dreifache der Breite des Naßteils beträgt, und daß für jede Reihe
- die Zuströmung der Umgebungsluft in den Trockenteil sowohl von der Seite des Freiraums wie auch von der abgewandten Außenseite her erfolgt, und
- die Zuströmung der Umgebungsluft in den Naßteil ausschließlich von der dem Freiraum abgewandten Außenseite her erfolgt.

Erfindungsgemäß wird daher ein Lösungsweg beschritten, der teils Elemente der bekannten Kühlturmanordnung nach Figur 1b, teils jedoch auch Elemente der ebenfalls bekannten Kühlturmanordnung nach Figur 1c aufgreift. Die bei der Anordnung nach Figur 1c äußerst unbefriedigende Vermischung der Teilströme innerhalb der Mischkammer wird erfindungsgemäß dadurch stark verbessert, als die Zuströmung der Umgebungsluft in den Trockenteil nicht mehr einseitig erfolgt, sondern von beiden Seiten her. Dieser Schritt erfordert allerdings eine Trennung der bei der Anordnung nach Figur 1c unmittelbar gegeneinander gesetzten Kühltürme. Bei dieser Trennung wird wiederum nicht der in Figur 1b skizzierte Weg beschritten, bei dem die Kühlturmreihen zwar räumlich voneinander getrennt sind, jedoch die Zuströmung der Umgebungsluft nicht nur im Trockenteil, sondern auch im Naßteil jeweils von beiden Seiten her erfolgt. Vielmehr wird bei der erfindungsgefäßen Anordnung der Weg beschritten, zwar die Zuströmung der Umgebungsluft in den Trockenteil sowohl an der Seite des Freiraums zwischen den Reihen wie auch von der abgewandten Außenseite durchzuführen, jedoch die Zuströmung der Umgebungsluft in den Naßteil ausschließlich von der dem Freiraum abgewandten Außenseite her durchzuführen. Mit dieser Anordnung sind die folgenden Effekte verbunden:
1.) Im Naßteil des Kühlturms kommt es zu praktisch keinem Interferenzeffekt mehr. Damit braucht auch kein entsprechender Zuschlag in den Auslegungsdaten vorgesehen werden.
2.) Lediglich für den Trockenteil ist eine gewisse Interferenz zu berücksichtigen. Diese wirkt sich aber auf die Größe und damit die Investitionskosten des Kühlturms wesentlich geringer aus, als die notwendige Berücksichtigung einer Interferenz im Naßteil.
3.) Der Trockenteil mit Lufteintritt von beiden Seiten her arbeitet mit sehr guter Durchmischung der trockenen und feuchten Luft in der Mischkammer.
4.) Von der Kühlluftmenge, welche ein Hybridkühlturm ansaugt, entfallen üblicherweise 25% bis 30% auf den Trockenteil. Da in dem Freiraum zwischen den beiden Reihen kein Luftzutritt in den Naßteil erfolgt, verringert sich dementsprechend auch dort die angesaugte Luftmenge auf etwa 25% bis 30% jener Luftmenge, die bei einem Luftzutritt in den Naßteil von beiden Seiten her angesogen würde. Daher kann die in Figur 1b eingezeichnete Breite A des Freiraums zwischen den beiden Reihen deutlich reduziert werden. Bevorzugt beträgt die Breite des Freiraums, gemessen zwischen den einander zugewandten, geschlossenen Seiten des Naßteils, nur noch das ein- bis zweifache der Breite des Naßteils.

Mit einer Ausgestaltung der Erfindung wird vorgeschlagen, daß die beiderseitigen Zuströmöffnungen des Trockenteils symmetrisch angeordnet sind. Auf diese Weise wird die Vermischung der aus Naßteil und Trockenteil austretenden Luftströme innerhalb der Mischkammer nochmals verbessert und damit die Neigung zur Schwadenbildung des Kühlturms nochmals verringert.

Schließlich wird mit der Erfindung vorgeschlagen, daß die Größe der seitlich angeordneten Zuströmöffnungen so bemessen ist, daß für jeden Kühlturm die in den Naßteil zuströmende Umgebungsluftmenge zwei- bis dreimal so groß wie die insgesamt in den Trockenteil zuströmende Umgebungsluftmenge ist.

Weitere Einzelheiten und Vorteile werden nachfolgend anhand der zugehörigen Zeichnungen erläutert. Darin zeigen:
- Fig. 1a: einen Hybridkühlturm in einer zum Stand der Technik zählenden Bauweise;
- Fig. 1b: eine ebenfalls zum Stand der Technik zählende Anordnung von Hybridkühltürmen in zwei Reihen;
- Fig. 1c: eine ebenfalls zum Stand der Technik zählende Anordnung von Hybridkühltürmen in zwei Reihen und
- Fig. 2: eine Anordnung von Hybridkühltürmen in zwei Reihen in Übereinstimmung mit der Erfindung.

Die Figuren 1a, 1b und 1c zeigen bekannte Anordnungen von Hybridkühltürmen. Die Kühltürme bestehen aus einem unten angeordneten Naßteil 1 und einem oberhalb angeordneten Trockenteil 2. Üblicherweise weisen die Kühltürme eine rechteckige oder quadratische Grundfläche auf. Der Naßteil 1 besteht, von unten nach oben betrachtet, aus einer Wasserauffangwanne 3, Kühleinbauten 4 sowie Wasserverteileinrichtungen 5. Bei den Wasserverteileinrichtungen 5 handelt es sich um Sprühdüsen, aus denen das abzukühlende Kühlwasser austritt, wobei dieses infolge seiner Schwerkraft nach unten in dem Bereich der Kühleinbauten 4 rieselt. Dort kommt es zu einem unmittelbaren Wärme- und Stoffaustausch mit der zugleich aufsteigenden Kühlluft. Die Kühlluft ist Umgebungsluft, die gemäß den Zuströmpfeilen 6 in den Naßteil 1 einströmt. Hierzu sind in den Seitenwänden 7 des Naßteils Öffnungen 8 für den Zutritt der. Umgebungsluft vorgesehen, die sich oberhalb der Auffangwanne 3, jedoch unterhalb der Kühleinbauten 4 befinden.

Der Trockenteil 2 ist auf den vorstehend beschriebenen Naßteil 1 aufgesetzt. Im wesentlichen besteht der Trockenteil 2 aus Wärmetauschern 9, die von ebenfalls seitlich zuströmender Umgebungsluft entsprechend den Zuströmpfeilen 10 durchströmt werden, wobei es zu einem mittelbaren Wärmeaustausch mit dem in Rohren strömenden Wasser kommt.

Das abzukühlende Wasser gelangt von einer Speiseleitung 11 zunächst in die Wärmetauscher 9, durchströmt diese vertikal von unten nach oben, und gelangt anschließend über eine Verbindungsleitung 13 zu der gleichmäßig über den gesamten Grundriß des Kühlturms verteilten Wasserverteileinrichtung 5. Die Wärmetauscher 9 arbeiten daher im Kreuzstrom. Die den Trockenteil 2 verlassende, erwärmte Luft gelangt in eine zentral angeordnete Mischkammer 14. Die Mischkammer 14 befindet sich unmittelbar über dem Naßteil 1, wodurch die den Naßteil 1 verlassende Luft von unten in die Mischkammer 14, und die den Trockenteil 2 verlassende Luft von der Seite her in die Mischkammer 14 eintritt. In der Mischkammer 14 können sich scheibenförmige Verwirbelungseinbauten 15 befinden, die den Vermischungseffekt begünstigen. Die gleichmäßig vermischte Luft verläßt den Kühlturm über den Saugventilator 16 nach oben hin.

Bei der bekannten Anordnung nach Figur 1b sind die Hybridkühltürme in zwei Reihen angeordnet, wodurch sich zwischen diesen Reihen ein Freiraum 17 der Breite A ergibt. Dieser Freiraum muß zur Vermeidung von Interferenzeffekten die voranstehend bereits beschriebene Größe aufweisen, wodurch sich bei der Anordnung nach Figur 1b ein sehr großer Flächenbedarf ergibt.

Bei der ebenfalls bekannten Anordnung nach Figur 1c ist dieser Platzbedarf wesentlich geringer, jedoch führt die jeweils nur einseitige Zuströmung im Naßteil und Trockenteil entsprechen den Strömungspfeilen 6 und 10 zu einer unzureichenden Vermischung innerhalb der Mischkammer 14.

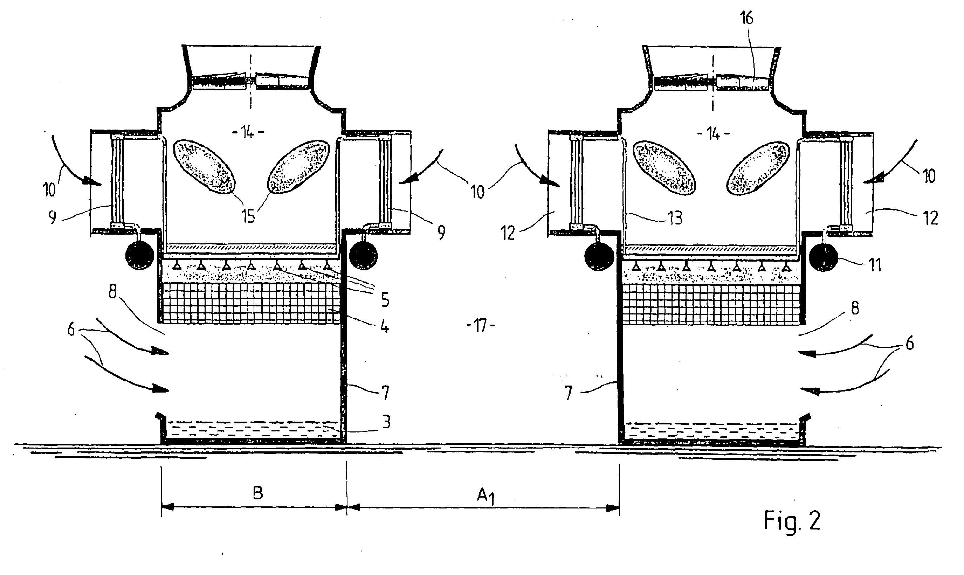

Figur 2 zeigt dem gegenüber eine Anordnung gemäß der Erfindung. Die Hybridkühltürme sind wiederum in zwei Reihen angeordnet, wobei sich ein Freiraum 17 mit einer Breite A₁ ergibt. Das Maß A₁ beträgt, gemessen zwischen den einander zugewandten, geschlossenen Seitenwänden 7 des Naßteils 1, das ein- bis zweifache der Breite B des Naßteils 1. Schädliche Interferenzeffekte im Naßteil können nicht auftreten, da die dem Freiraum 17 zugewandten Seitenwände 7 der Naßteile verschlossen sind, und dort keine Luft eintreten kann. Der Zutritt von Umgebungsluft in den Naßteil 1 erfolgt vielmehr ausschließlich von der dem Freiraum 17 abgewandten Außenseite her, wie dies die Zuströmpfeile 6 symbolisieren.

Die Trockenteile 2 der Kühltürme werden hingegen in herkömmlicher Weise von beiden Seiten her angeströmt, wie dies die Zuströmpfeile 10 symbolisieren. Hierdurch und durch eine symmetrische Zuströmung wird eine sehr gute Vermischung der einerseits den Naßteil und andererseits den Trockenteil verlassenden Ströme in der gemeinsamen Mischkammer 14 erreicht.

Es hat sich herausgestellt, daß der einseitige Luftzutritt in den Naßteil 1 strömungstechnisch kein Problem darstellt, da die im Naßteil angeordneten Kühleinbauten 4 ohnehin einen Druckverlust bewirken, welcher die Luft bereits innerhalb der Kühleinbauten sehr gleichmäßig verteilt.

### Bezugszeichenliste

- 1.: Naßteil
- 2: Trockenteil
- 3: Auffangwanne
- 4: Kühleinbauten
- 5: Wasserverteileinrichtung
- 6: Zuströmpfeil
- 7: Seitenwand
- 8: Öffnung
- 9: Wärmetauscher
- 10: Zuströmpfeil
- 11: Speiseleitung
- 12: Zuströmöffnung des Trockenteils
- 13: Verbindungsleitung
- 14: Mischkammer
- 15: Verwirbelungseinbauten
- 16: Saugventilator
- 17: Freiraum
- A: Abstand
- A₁: Abstand
- B: Breite des Kühlturms

## Patentansprüche

1. Anordnung mehrerer Hybridkühltürme, die sich jeweils zusammensetzen aus
a) einem Naßteil (1) mit Wasserverteileinrichtungen (5) für den unmittelbaren Wärmeaustausch zwischen Kühlwasser und seitlich in den Naßteil (1) zuströmender Umgebungsluft,
b) einem oberhalb des Naßteils (1) angeordneten Trockenteil (2) mit Wärmetauschern (9) für den mittelbaren Wärmeaustausch zwischen Kühlwasser und seitlich in den Trockenteil (2) zuströmender Umgebungsluft,
c) einer gemeinsamen Mischkammer (14) für die den Naßteil und die den Trockenteil verlassende Luft,
**dadurch gekennzeichnet,**
**daß** die Kühltürme in zwei zueinander im wesentlichen parallelen Reihen angeordnet sind, zwischen denen sich ein Freiraum (17) befindet, wobei die Breite des Freiraums, gemessen zwischen den einander zugewandten Seiten des Naßteils, weniger als das Dreifache der Breite des Naßteils beträgt und
**daß** für jede Reihe die Zuströmung der Umgebungsluft in den Trockenteil (2) sowohl von der Seite des Freiraums (17) wie auch von der abgewandten Außenseite her erfolgt, und
**daß** für jede Reihe die Zuströmung der Umgebungsluft in den Naßteil (1) ausschließlich von der dem Freiraum (17) abgewandten Außenseite her erfolgt.

2. Anordnung nach Anspruch 1, **dadurch gekennzeichnet, daß** die beidseitigen Zuströmöffnungen (12) des Trockenteils (2) symmetrisch angeordnet sind.

3. Anordnung nach Anspruch 1 oder Anspruch 2, **dadurch gekennzeichnet, daß** die Breite (A₁) des Freiraums (17), gemessen zwischen den einander zugewandten, geschlossenen Seiten (7) des Naßteils (1), das ein- bis zweifache der Breite (B) des Naßteils (1) beträgt.

4. Anordnung nach einem der Ansprüche 1 bis 3, **dadurch gekennzeichnet, daß** die Größe der seitlich angeordneten Zuströmöffnungen (8; 12) so bemessen ist, daß für jeden Kühlturm die in den Naßteil (1) zuströmende Umgebungsluftmenge zwei- bis dreimal so groß wie die insgesamt in den Trockenteil (2) zuströmende Umgebungsluftmenge ist.

## Claims

1. An arrangement of several hybrid cooling towers, each composed of
a) a wet part (1), comprising water distribution devices (5) for the direct exchange of heat between cooling water and ambient air flowing laterally into the wet part (1);
b) a dry part (2) arranged above the wet part (1), comprising heat exchangers (9) for the indirect exchange of heat between cooling water and ambient air flowing laterally into the dry part (2);
c) a common mixing chamber (14) for the air leaving the wet part and the dry part;
**characterized in that**
the cooling towers are arranged in two mutually substantially parallel rows, between which there is a clearance (17), with the width of the clearance, as measured between the mutually facing sides of the wet part, being less than three times the width of the wet part, and
for each row the inflow of ambient air into the dry part (2) occurs both from the side of the clearance (17) as well as from the averted outside, and
for each row the inflow of ambient air into the wet part (1) occurs exclusively from the outside averted from the clearance (17).

2. An arrangement according to claim 1, **characterized in that** the two-side inflow openings (12) of the dry part (2) are arranged symmetrically.

3. An arrangement according to claim 1 or claim 2, **characterized in that** the width (A₁) of the clearance (17), is once to twice the width (B) of the wet part (1), as measured between the mutually facing closed sides (7) of the wet part (1).

4. An arrangement according to one of the claims 1 to 3, **characterized in that** the size of the laterally arranged inflow openings (8; 12) are dimensioned in such a way that for each cooling tower the ambient air quantity flowing into the wet part (1) is twice to three times as large as the ambient air quantity flowing in total into the dry part (2).

## Revendications

1. Agencement de plusieurs tours de refroidissement hybrides, chacune d'elles étant composée
a) d'une partie humide (1) avec des systèmes de distribution d'eau (5) pour l'échange de chaleur direct entre l'eau de refroidissement et l'air ambiant entrant par le côté dans la partie humide (1),
b) d'une partie sèche (2) disposée au-dessus de la partie humide (1) avec des échangeurs de chaleur (9) pour l'échange de chaleur indirect entre l'eau de refroidissement et l'air ambiant entrant par le côté dans la partie sèche (2),
c) une chambre commune de mélange (14) de l'air sortant de la partie humide et de la partie sèche,
**caractérisé en ce**
**que** les tours de refroidissement sont disposées en deux rangées sensiblement parallèles ménageant entre elles un espace libre (17), la largeur de l'espace libre, mesurée entre les faces tournées l'une vers l'autre de la partie humide, étant inférieure au triple de la largeur de la partie humide et
**que** pour chaque rangée, l'air ambiant entre dans la partie sèche (2) tant du côté de l'espace libre (17) que du côté de la face extérieure détournée et
**que** pour chaque rangée l'air ambiant n'entre dans la partie humide (1) que du côté de la face extérieure détournée de l'espace libre (17).

2. Agencement selon la revendication 1, **caractérisé en ce que** les orifices d'entrée (12) dans la partie sèche (2) sont disposés de manière symétrique.

3. Agencement selon la revendication 1 ou 2, **caractérisé en ce que**, mesurée entre les deux faces (7) fermées tournées l'une vers l'autre de la partie humide (1), la largeur (A₁) de l'espace libre (17) est égale à une à deux fois la largeur (B) de la partie humide (1).

4. Agencement selon l'une quelconque des revendications 1 à 3, **caractérisé en ce que** la taille des orifices d'entrée (8 ; 12) disposés sur le côté est conçue de telle sorte que pour chaque tour de refroidissement la quantité d'air ambiant entrant dans la partie humide (1) est le double ou le triple de la quantité totale d'air ambiant entrant dans la partie sèche (2).
